# EUROPEAN PATENT APPLICATION

(11) **EP 4 686 237 A1**
(43) Date of publication of application: **28.01.2026**
(21) Application number: 24191169.2
(22) Date of filing: 26.07.2024
(51) Int. Cl.: H04W 4/90

(54) **METHOD FOR CONDUCTING AN EMERGENCY COMMUNICATION INVOLVING A PUBLIC SAFETY ANSWERING POINT ENTITY OR FUNCTIONALITY, A MOBILE POINT OF CARE ENTITY AS WELL AS A TELE-MEDICAL SERVICE ENTITY OR FUNCTIONALITY, AMBULANCE COMMUNICATION MODULE, PUBLIC SAFETY ANSWERING POINT ENTITY OR FUNCTIONALITY, SYSTEM OR TELECOMMUNICATIONS NETWORK, PROGRAM AND COMPUTER PROGRAM PRODUCT**

(71) Applicant: Deutsche Telekom AG, 53113 Bonn (DE)
(72) Inventor: BÜCHTER, Martin, 53840 Troisdorf (DE); ESSELING, Norbert, 53229 Bonn (DE)
(74) Representative: Schwöbel, Thilo K.

(57) **Abstract**

The present invention relates to a method for conducting an emergency communication involving a public safety answering point entity or functionality, a mobile point of care entity as well as a tele-medical service entity or functionality, wherein the public safety answering point entity or functionality is configured to receive an initiating emergency communication being related to an emergency situation requiring the help of the mobile point of care entity, the initiating emergency communication being a privileged communication, wherein the mobile point of care entity is configured to be supported - by the tele-medical service entity or functionality and by means of using a complementary emergency communication between the mobile point of care entity and the tele-medical service entity or functionality - in helping in view of the emergency situation, wherein the method comprises the following steps:
-- in a first step, the initiating emergency communication is received by the public safety answering point entity or functionality,
-- in a second step, the public safety answering point entity or functionality selects the mobile point of care entity and transmits emergency communication-related data towards the mobile point of care entity,
-- in a third step, the mobile point of care entity initiates the complementary emergency communication, to the tele-medical service entity or functionality, wherein the complementary emergency communication is likewise a privileged communication.

## Description

### BACKGROUND

The present invention relates a method for conducting an emergency communication involving a public safety answering point entity or functionality, a mobile point of care entity as well as a tele-medical service entity or functionality.

Furthermore, the present invention relates to an ambulance communication module related to a mobile point of care entity for conducting an emergency communication involving a public safety answering point entity or functionality.

Additionally, the present invention relates to a system or to a telecommunications network comprising, or being associated or assigned to, a public safety answering point entity or functionality for conducting an emergency communication involving the public safety answering point entity or functionality.

Furthermore, the present invention relates to a program and to a computer program product for conducting an emergency communication involving a public safety answering point entity or functionality, a mobile point of care entity as well as a tele-medical service entity or functionality according to the inventive method.

Emergency communications, or emergency calls, are an established tool to provide help in case of emergencies. With the advent of networks like 4G, 5G and beyond, much bigger data rates are available. These data rates allow far more improved medical care during emergency communications and at the same time reduce the burden on emergency doctors: A tele-emergency doctor, who is remotely assisting paramedics in an ambulance, could be enabled to assess the situation and support the paramedics via secure and stable video and audio communications receiving real-time data about the patient's vital parameters (e.g., patient view and ultrasound images). This might lead to a significant reduction in the workload for emergency doctors and at the same time to improved care for patients.

However, in currently known implementations, normal - or standard -calles or, generally, communications are typically used, especially communication resources having a lower priority compared to emergency calls or emergency connections; in addition, roaming restrictions may hinder communication.

### SUMMARY

An object of the present invention is to provide an effective and simple solution for conducting an emergency communication involving a public safety answering point entity or functionality, a mobile point of care entity as well as a tele-medical service entity or functionality in a manner that reliable communication is able to be assured. A further object of the present invention is to provide a corresponding ambulance communication module, especially related to the mobile point of care entity, a corresponding public safety answering point entity or functionality, a corresponding system or telecommunications network comprising, or being associated or assigned to, a public safety answering point entity or functionality, as well as a corresponding program and computer-readable medium.

The object of the present invention is achieved by a method for conducting an emergency communication involving a public safety answering point entity or functionality, a mobile point of care entity as well as a tele-medical service entity or functionality, wherein the mobile point of care entity comprises an ambulance communication module, wherein the public safety answering point entity or functionality is configured to receive an initiating emergency communication being a privileged communication and being related to an emergency situation, wherein, by means of the ambulance communication module establishing a complementary emergency communication with the tele-medical service entity or functionality, the mobile point of care entity is configured to be supported in view of the emergency situation, wherein the method comprises the following steps:
-- in a first step, the initiating emergency communication is received by the public safety answering point entity or functionality,
-- in a second step, the public safety answering point entity or functionality selects the mobile point of care entity and transmits emergency communication-related data towards the ambulance communication module of the mobile point of care entity,
-- in a third step, the ambulance communication module of the mobile point of care entity initiates the complementary emergency communication, to the tele-medical service entity or functionality, wherein the complementary emergency communication is likewise a privileged communication.

According to the present invention, it is advantageously possible that emergency communications - involving, besides a public safety answering point entity or functionality, also a mobile point of care entity as well as a tele-medical service entity or functionality - in a manner such that prioritized communication is possible, especially between the mobile point of care entity and the tele-medical service entity or functionality, even after the initial emergency communication to the public safety answering point entity or functionality might be terminated.
Typically, emergency calls - or emergency communications, such as eCall or next generation eCall (NG-eCall) - and their connections are prioritized, in public mobile networks, over other communication applications. These privileges especially comprise, amongst others, pre-emption (i.e. even in case the network is overloaded, emergency calls have priority over other calls), limited-service state (allowing the use of any network for emergency calls/eCalls even if there is no roaming (agreement) with the network to ensure the best possible coverage in emergencies), accessibility (the emergency numbers, e.g. 112/110 or alike, are always available, 24 hours a day, 7 days a week).

According to the present invention, a method is provided for conducting an emergency communication that involves - besides the public safety answering point entity or functionality - also the mobile point of care entity, and the tele-medical service entity or functionality. It is proposed according to the present invention that the mobile point of care entity comprises an ambulance communication module.
According to the present invention, the public safety answering point entity or functionality is configured to receive an initiating emergency communication being a privileged communication and being related to an emergency situation just as it is conventionally known. However, according to the present invention, by means of the ambulance communication module establishing a complementary emergency communication with the tele-medical service entity or functionality, the mobile point of care entity is configured to be supported in view of the emergency situation, and, according to the present invention, typically after the initiating emergency communication having been received by the public safety answering point entity or functionality, the public safety answering point entity or functionality selects the mobile point of care entity and transmits emergency communication-related data towards the ambulance communication module of the mobile point of care entity, and the ambulance communication module of the mobile point of care entity initiates the complementary emergency communication, to the tele-medical service entity or functionality, wherein the complementary emergency communication is likewise a privileged communication.

Hence, according to the present invention, it is advantageously possible to provide a simpler, though even more reliable approach for providing, or enabling, the complementary emergency communication. According to the present invention, it is proposed to apply the privileges associated with 112/110/911 emergency calls (or, at least part thereof) also for the communication (complementary emergency communication) between the paramedics / ambulance and the tele-emergency doctor (rather than deploying multiple different mobile connections simultaneously or relying on a "best effort" approach when using non-privileged means of communication).

According to the present invention, applying the privileges associated with emergency calls / eCalls for the connection (complementary emergency communication) between the ambulance and the tele-emergency doctors advantageously allows for the use of any network even if there is no roaming (or roaming agreement) with the (used) network; hence, it is guaranteed that the best possible coverage and/or connection between the paramedics and/or ambulance personnel (mobile point of care entity) and the tele-emergency doctors (tele-medical service entity or functionality) even when there is no commercial agreement and/or contract with the network (i.e. the mobile communication network used for such complementary communication); especially there are no specific extra settings (like priorities) that need to be agreed between any networks (i.e. mobile communication networks) involved in such an emergency communication.

4G and 5G networks can deliver data rates that fulfill or exceed the requirements associated; e.g. the maximum speed of 4G is 100 Mbps to 1 Gbps, depending on the technology and network conditions, whereas for a 720p (HD Ready) video, a data rate of at least 2-3 megabits per second (Mbps) is typically recommended. For a 1080p (Full HD) video, a data rate of at least 5 Mbps is recommended. For 4K Ultra HD video, which has an even higher resolution, a data rate of at least 25 Mbps is recommended.

According to at least one embodiment of the present invention, it is advantageously possible and preferred that the initiating emergency communication is a mobile-originated emergency communication, a mobile-originated emergency call or a mobile-originated eCall,
wherein especially, the emergency situation is such as that help is required, especially from the mobile point of care entity,
wherein especially, the mobile point of care entity is configured to be supported - by the tele-medical service entity or functionality and by means of using the complementary emergency communication between the ambulance communication module and the tele-medical service entity or functionality - in helping in view of the emergency situation.

Thereby, it is advantageously possible to realize and implement the inventive method in a comparatively simple and efficient manner.

According to at least one further embodiment of the present invention, it is furthermore advantageously possible and preferred that the complementary emergency communication is, or corresponds to, a multimedia emergency communication or to a multimedia emergency call or to an emergency call setup, towards the tele-medical service entity or functionality, wherein especially the complementary emergency communication is initiated towards the tele-medical service entity or functionality that has been assigned by the public safety answering point entity or functionality,
wherein especially the complementary emergency communication is assigned privileges in accordance to the privileges of the initiating emergency communication, wherein the complementary emergency communication uses privileges associated with the initiating emergency communication to access any available network, especially regardless of commercial agreements or contracts with said network, wherein especially the complementary emergency communication is prioritized over other non-emergency communications to ensure the best possible connection quality,
wherein especially the complementary emergency communication includes multimedia transmission and is established over packet-oriented networks, capable of delivering data rates sufficient for high-definition video communication,
wherein especially the emergency call setup includes a number or uniform resource location, URL, - e.g. a SIP uniform resource location - assigned by the public safety answering point entity or functionality to connect the ambulance communication module with the tele-medical service entity or functionality,
wherein especially the emergency call setup is established and accommodates a multimedia call.

Thereby, it is advantageously possible to realize and implement the inventive method in a comparatively simple and efficient manner.

According to a further embodiment of the present invention, it is still furthermore advantageously possible and preferred that the emergency communication-related data, transmitted to the ambulance communication module of the mobile point of care entity, comprises a token information, especially a token information generated by the public safety answering point entity or functionality,
wherein, by means of the token information, the ambulance communication module of the mobile point of care entity is allowed to establish the privileged complementary emergency communication to the tele-medical service entity or functionality,
wherein especially the token information is a temporary token information,
wherein especially the token information is an item that is assigned by the public safety answering point entity or functionality,
wherein especially the token information is verified, decrypted and/or authenticated by the ambulance communication module, wherein especially verification of the token at the ambulance communication module involves decrypting the token and checking the digital signature to ensure the authenticity and integrity of the data,
wherein especially a receipt confirmation is transmitted, by the ambulance communication module, to the public safety answering point entity or functionality upon successful verification and decryption of the token information.

Thereby, it is advantageously possible to realize and implement the inventive method in a comparatively simple and efficient manner.

According to the present invention, it is furthermore advantageously possible and preferred that the token information comprises one or a plurality out of the following:
-- routing information to a connection end point for mobile point of care entity services, especially the tele-medical service entity or functionality, preferably a hospital or another public safety answering point entity or functionality,
-- an identifier information of the originating public safety answering point entity or functionality,
-- data related to or associated with the current emergency situation requiring the help of the mobile point of care entity, especially comprising eCall-related data and/or an eCall-minimum set of data, wherein especially such data related to or associated with the current emergency situation are encrypted and/or comprise a digital signature for authentication purposes,
-- key information to authenticate the ambulance communication module against the tele-medical service entity or functionality,
-- data about the network and/or other call-related data on which the initiating emergency communication originated.

It is thereby advantageously possible to realize and implement the inventive method in a comparatively simple and efficient manner.

According to the present invention, it is furthermore advantageously possible and preferred that the initiation of the complementary emergency communication, having the privileges of the initiating emergency communication - or, at least, comparable privileges, especially regarding its routing and/or pre-emption rules regarding other communication flows on shared resources - is secured by means of using a public key infrastructure using asymmetric encryption methods in a manner such that at least the mobile point of care entity and the public safety answering point entity or functionality are assigned, respectively, to a key information comprising a public key and a private key.

It is thereby advantageously possible to realize and implement the inventive method in a comparatively simple and efficient manner.

Additionally according to the present invention, it is furthermore advantageously possible and preferred that the key information of the mobile point of care entity is added and/or modified dynamically, especially using a procedure based non-access stratum messages and/or a procedure based on over the air transmission, wherein especially a hash value of the token information is generated and secured via asymmetric encryption by means of signing the message.

It is thereby advantageously possible to realize and implement the inventive method in a comparatively simple and efficient manner.

Furthermore according to the present invention, it is advantageously possible and preferred that the public safety answering point entity or functionality - after or while receiving the initiating emergency communication - analyzes data associated with the initiating emergency communication, especially an emergency call or an eCall, wherein especially the data analyzed by the public safety answering point entity or functionality include location information, patient condition, and other relevant emergency details.

It is thereby advantageously possible to realize and implement the inventive method in a comparatively simple and efficient manner.

Furthermore, the present invention relates to an ambulance communication module, especially related to a mobile point of care entity, for conducting an emergency communication involving a public safety answering point entity or functionality, the ambulance communication module as well as a tele-medical service entity or functionality, wherein the ambulance communication module is configured such that after the public safety answering point entity or functionality having received an initiating emergency communication being a privileged communication and being related to an emergency situation, the ambulance communication module establishes a complementary emergency communication with the tele-medical service entity or functionality, especially such that the mobile point of care entity is able to be supported in view of the emergency situation, especially in helping in view of the emergency situation, wherein the ambulance communication module is configured such that:
-- the ambulance communication module receives emergency communication-related data from the public safety answering point entity or functionality, especially after the public safety answering point entity or functionality having received the initiating emergency communication and selected the mobile point of care entity,
-- the ambulance communication module initiates the complementary emergency communication, to the tele-medical service entity or functionality, wherein the complementary emergency communication is likewise a privileged communication.

Furthermore, the present invention relates to a public safety answering point entity or functionality for conducting an emergency communication that additionally involves an ambulance communication module of a mobile point of care entity as well as a tele-medical service entity or functionality, wherein the public safety answering point entity or functionality is configured such as to receive an initiating emergency communication being a privileged communication and being related to an emergency situation, and the public safety answering point entity or functionality being configured such that a complementary emergency communication is established between the ambulance communication module and the tele-medical service entity or functionality in order for the mobile point of care entity being supported in view of the emergency situation, wherein the public safety answering point entity or functionality is configured such that:
-- the initiating emergency communication is received by the public safety answering point entity or functionality,
-- the public safety answering point entity or functionality selects the mobile point of care entity and transmits emergency communication-related data towards the ambulance communication module of the mobile point of care entity in view of the complementary emergency communication being established to the tele-medical service entity or functionality, wherein the complementary emergency communication is likewise a privileged communication.

Furthermore, the present invention relates to a system or to a telecommunications network comprising, or being associated or assigned to, a public safety answering point entity or functionality for conducting an emergency communication involving the public safety answering point entity or functionality, a mobile point of care entity as well as a tele-medical service entity or functionality, wherein the mobile point of care entity comprises an ambulance communication module, wherein the public safety answering point entity or functionality is configured to receive an initiating emergency communication being a privileged communication and being related to an emergency situation, wherein, by means of the ambulance communication module establishing a complementary emergency communication with the tele-medical service entity or functionality, the mobile point of care entity is configured to be supported in view of the emergency situation, wherein the system or telecommunications network is configured such that:
-- the initiating emergency communication is received by the public safety answering point entity or functionality,
-- the public safety answering point entity or functionality selects the mobile point of care entity and transmits emergency communication-related data towards the ambulance communication module of the mobile point of care entity,
-- the ambulance communication module of the mobile point of care entity initiates the complementary emergency communication, to the tele-medical service entity or functionality, wherein the complementary emergency communication is likewise a privileged communication.

Additionally, the present invention relates to a program comprising a computer readable program code which, when executed on a computer or on a public safety answering point entity or functionality or on an ambulance communication module of a mobile point of care entity or on a tele-medical service entity or functionality, or in part on a public safety answering point entity or functionality and/or in part on an ambulance communication module of a mobile point of care entity and/or in part on a tele-medical service entity or functionality, causes the computer or the public safety answering point entity or functionality or the ambulance communication module or the tele-medical service entity or functionality to perform the inventive method.

Still additionally, the present invention relates to a computer-readable medium comprising instructions which when executed on a computer or on a public safety answering point entity or functionality or on an ambulance communication module of a mobile point of care entity or on a tele-medical service entity or functionality, or in part on a public safety answering point entity or functionality and/or in part on an ambulance communication module of a mobile point of care entity and/or in part on a tele-medical service entity or functionality, causes the computer or the public safety answering point entity or functionality or the ambulance communication module or the tele-medical service entity or functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

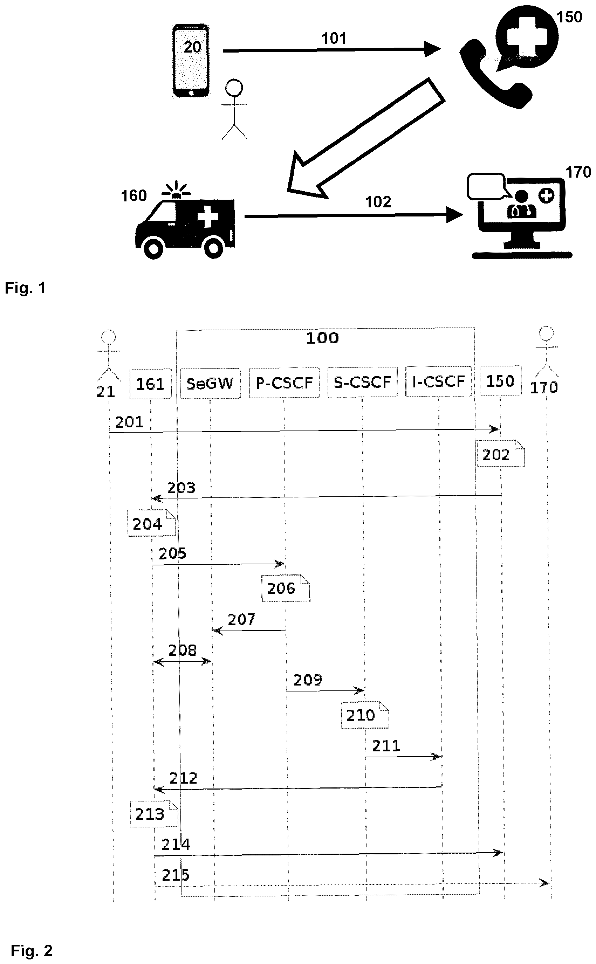

**Figure** 1 schematically illustrates the overall situation according to the present invention, where an initiating emergency communication is received by a public safety answering point entity or functionality, and the public safety answering point entity or functionality involves a mobile point of care entity as well as a tele-medical service entity or functionality, both these entities being connected by means of a complementary emergency communication.

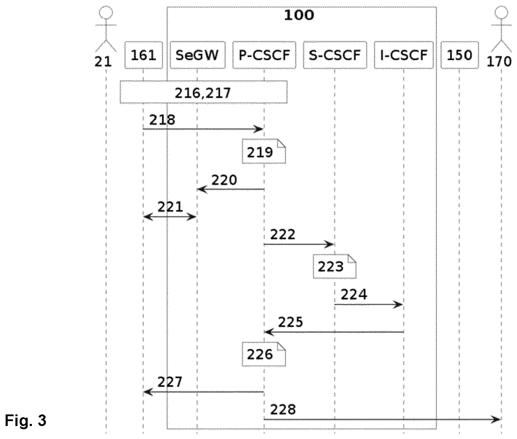

**Figures** 2 and 3 schematically illustrate an embodiment of the inventive method where the public safety answering point entity or functionality selects the mobile point of care entity and transmits emergency communication-related data towards the ambulance communication module of the mobile point of care entity, and wherein the ambulance communication module of the mobile point of care entity initiates the complementary emergency communication to the tele-medical service entity or functionality.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, the overall situation according to the present invention is schematically shown: an initiating emergency communication 101 is received by a public safety answering point entity or functionality 150, and the public safety answering point entity or functionality 150 involves a mobile point of care entity 160 as well as a tele-medical service entity or functionality 170, both these entities being connected by means of a complementary emergency communication 102. Especially, the initiating emergency communication 101 - e.g. an eCall or an NG-eCall or another emergency communication - is initiated by a user equipment 20, and a network - typically a mobile communication network - is used between the entities involved; however, the network is not shown in Figure 1.

According to the inventive method, the public safety answering point entity or functionality 150 is configured to receive the initiating emergency communication 101. The initiating emergency communication 101 is a privileged communication (and, is typically related to an emergency situation, e.g. an emergency situation of the person using the user equipment 20 or of a nearby person. The mobile point of care entity 160 comprises an ambulance communication module 161 (not explicitly shown in Figure1) by means of which a complementary emergency communication 102 is established with the tele-medical service entity or functionality 170 such that the mobile point of care entity 160 (or its staff) is supported (or able to be supported) by the tele-medical service entity or functionality 170 in view of the emergency situation: The initiating emergency communication 101 is received by the public safety answering point entity or functionality 150; the public safety answering point entity or functionality 150 selects the mobile point of care entity 160 and transmits emergency communication-related data towards the ambulance communication module 161 of the mobile point of care entity 160. Subsequently, the ambulance communication module 161 of the mobile point of care entity 160 initiates the complementary emergency communication 102, to the tele-medical service entity or functionality 170. The complementary emergency communication 102 is likewise a privileged communication.

Especially according to the present invention, the emergency communication-related data, transmitted to the ambulance communication module 161 of the mobile point of care entity 160, comprises a token information, especially a token information generated by the public safety answering point entity or functionality 150.

According to the present invention, one of the advantages is that the it is possible to assign the privileges (or, at least, part thereof) of the initiating emergency communication 101 also to the complementary emergency communication 102, i.e. in IP-based networks.

Thus, in principle according to the present invention:
-- the public safety answering point entity or functionality 150 receives the incoming emergency call / eCall (i.e. the initiating emergency communication) 101, and it analyses the accompanied data of the emergency call / eCall;
-- based on the assessment of these data, the public safety answering point entity or functionality 150 identifies and selects the most appropriate ambulance (i.e. mobile point of care entity 160);
-- the public safety answering point entity or functionality 150 forwards the accumulated emergency / eCall related data (i.e. emergency communication-related data) towards the ambulance communication module 161 of the ambulance (or mobile point of care entity 160), especially with a generated (temporary) token (or token information);
-- the ambulance communication module 161 receives the token (information) and verifies and/or decrypts the token (information) and signs an authentication part;
-- optionally, the ambulance communication module 161 sends a receipt confirmation to the public safety answering point entity or functionality 150;
-- the ambulance communication module 161 issues a multimedia emergency call (i.e., typically, using a number and/or an uniform resource location, URL) setup to tele-medic (tele-medical service entity or functionality 170) as assigned by the public safety answering point entity or functionality 150.

In Figures 2 and 3, an embodiment of the inventive method is schematically shown where the public safety answering point entity or functionality 150 selects the mobile point of care entity 160 and transmits emergency communication-related data towards the ambulance communication module 161 of the mobile point of care entity 160, and wherein the ambulance communication module 161 of the mobile point of care entity 160 initiates the complementary emergency communication 102 to the tele-medical service entity or functionality 170.

It is especially preferred according to the present invention that public-private-key authentication and asymmetric cryptography is used in order to implement the technical flows of information involved. These technical flows assume that the ambulance communication module 161, the public safety answering point entity or functionality 150 as well as the tele-medical service entity or functionality (or tele-medic) 170 have their respective public-private key pairs, and the necessary certificates are exchanged and authenticated between the entities involved in the flow.

Figure 2 schematically and exemplarily shows a communication diagram representing a first part of the flow (from the public safety answering point entity or functionality 150 to the ambulance communication module 161), involving - besides the person in emergency 21 (or, rather, the person initiating the initiating emergency communication 101) - the public safety answering point entity or functionality 150, the ambulance communication module 161 (of the mobile point of care entity 160), and the tele-medical service entity or functionality 170, and also involving the mobile communication network 100 used for this communication, typically comprising a security gateway SeGW, a proxy call session control function P-CSCF, a serving call session control function S-CSCF, and a interrogating call session control function I-CSCF.

In a first processing step 201, the initiating emergency communication 101 is initiated by the person in emergency 21, and received by the public safety answering point entity or functionality 150, i.e. the public safety answering point 150 receives the emergency call / eCall.
In a second processing step 202, the public safety answering point entity or functionality 150 analyzes the accompanying data, and, based on the assessment of the data /call, the public safety answering point entity or functionality 150 identifies and selects the most appropriate ambulance. The public safety answering point entity or functionality 150 furthermore generates a (temporary) token and forwards, in a third processing step 203, the encrypted token along with emergency call / eCall related data to the ambulance communication module 161.
In a fourth processing step 204, the ambulance communication module 161 uses its private key stored in the IP Multimedia Services Identity Module (ISIM) on the UICC/SIM card for authentication and encryption.
In a fifth processing step 205, the ambulance communication module 161 transmits the encrypted SIP message to the proxy call session control function P-CSCF i.e. the P-CSCF receives the encrypted SIP message from the ambulance communication module 161 and, in a sixth processing step 206, verifies the signature using the public key of the ambulance communication module 161 stored in the home subscriber server (e.g. of the mobile communication network 100).
In a seventh processing step 207, the P-CSCF triggers the security gateway SeGW to establish, in an eighth processing step 208, a secure tunnel (by means of the Security Gateway - SeGW) between the ambulance communication module 161 and the IMS network (i.e. the mobile communication network 100) for secure communication.
In a ninth processing step 209, the serving call session control function S-CSCF receives the decrypted SIP message from the P-CSCF.
In a tenth processing step 210, the S-CSCF verifies the signature of the message using the ambulance communication module's public key stored in the home subscriber server. In an eleventh processing step 211, the S-CSCF forwards the emergency call / eCall data to the interrogating call session control function (I-CSCF) for routing, and in a twelfth processing step 212, the I-CSCF forwards, especially optionally, the encrypted token and emergency call / eCall data to the ambulance communication module 161, i.e. the ambulance communication module 161 receives the encrypted token and data.
In a thirteenth processing step 213, the ambulance communication module 161 verifies/decrypts the token using its private key stored in its subscriber identity module (ISIM) and signs an authentication part using its private key.
In a fourteenth processing step 214, the ambulance communication module 161 optionally may send a receipt confirmation to the public safety answering point entity or functionality 150.
In a fifteenth processing step 215, the ambulance communication module 161 issues a multimedia emergency call (number / URL) setup to the tele-medical service (tele-medic) 170 assigned by the public safety answering point entity or functionality 150..

Figure 3 schematically and exemplarily shows a communication diagram representing a second part of the flow (from the ambulance communication module 161 to the tele-medical service entity or functionality 170, leading to the establishment of the complementary emergency communication), again involving - besides the person in emergency 21 or the person initiating the initiating emergency communication 101 - the public safety answering point entity or functionality 150, the ambulance communication module 161 (of the mobile point of care entity 160), and the tele-medical service entity or functionality 170, and also involving the mobile communication network 100 used for this communication, again typically comprising the security gateway SeGW, the proxy call session control function P-CSCF, the serving call session control function S-CSCF, and the interrogating call session control function I-CSCF.

In a sixteenth processing step 216, the ambulance communication module 161 initiates a session (typically a SIP, session initiation protocol, session) with an available network - especially towards the proxy-call session control function P-CSCF -, typical the available public land mobile network (or one of the available public land mobile networks), hereinafter also called network or mobile communication network 100.
In a seventeenth processing step 217, the ambulance communication module 161 sends an emergency sip message to the network 100 (especially to the proxy-call session control function P-CSCF), containing the (temporary) token received from the public safety answering point entity or functionality 150.
In an eighteenth processing step 218, the ambulance communication module 161 transmits (and the proxy call session control function P-CSCF in the IMS network receives) the encrypted SIP message from the ambulance communication module 161. In a nineteenth processing step 219, the proxy call session control function P-CSCF verifies the signature of the message using the ambulance communication module's public key stored in the home subscriber server (HSS).
In a twentieth processing step 220, the proxy call session control function P-CSCF triggers the security gateway SeGW to establish, in a twenty-first processing step 221, a secure tunnel (by means of the Security Gateway - SeGW) between the ambulance communication module 161 and the IMS network (i.e. the mobile communication network 100) for secure communication.
In a twenty-second processing step 222, the serving call session control function S-CSCF receives the decrypted SIP message from the proxy call session control function P-CSCF.
In a twenty-third processing step 223, the serving call session control function S-CSCF verifies the signature of the message using the ambulance communication module's 161 public key stored in the home subscriber server HSS.
In a twenty-fourth processing step 224, the serving call session control function S-CSCF forwards the encrypted message to the interrogating call session control function I-CSCF for routing to the PLMN.
In a twenty-fifth processing step 225, the interrogating call session control function I-CSCF forwards the encrypted message to the proxy-call session control function P-CSCF, and the mobile communication network 100 receives the encrypted message from the ambulance communication module 161,
In a twenty-sixth processing step 226, the proxy-call session control function P-CSCF decrypts the message from the ambulance communication module 161, using its private key; furthermore, the proxy-call session control function P-CSCF verifies the token (information) and signs an authentication part using its private key.
In a twenty-seventh processing step 227, optionally, the proxy-call session control function P-CSCF sends a receipt confirmation to the ambulance communication module 161.
In a twenty-eighth processing step 228, the proxy-call session control function P-CSCF routes the session towards the tele-medical service entity or functionality (tele-medic system) 170 assigned by the public safety answering point entity or functionality 150, thereby establishing the complementary emergency communication 102 (reference sign not represented in Figure 3), and applying the privileges that are typical to emergency calls, also to the complementary emergency communication 102.

According to the present invention, the token (or token information) is especially an item (or an information) that is assigned by the public safety answering point entity or functionality 150 and allows only authorized ambulance communication modules to establish "emergency call equivalent connections" (i.e. complementary emergency communications 102) to the tele-medical service entity or functionality (tele-medic) 170.

Especially according to the present invention, the token contains at least (or, alternatively, at least one out of the following):
-- routing information to a connection end point for the ambulance services (i.e., tele-medical service entity or functionality (Tele Doctor), Hospital or another public safety answering point entity or functionality (than the one having generated, or issued, the token information));
-- originating public safety answering point entity or functionality identification;
-- data associated with the actual emergency, i.e. these can comprise, e.g., eCall and other related data;
-- keys (i.e. public key information) to authenticate the ambulance communication module 161 against an access or an end point for the ambulance services.

Additionally, the token information may also contain (but does not necessarily comprise) data about the network and other call related data on which the emergency call originated.

The public and private keys (or key information) are typically pairs of public/private keys are especially assigned by a trusted instance; the ambulance communication module 161 and public safety answering point entity or functionality 150 hold or get a pair of such keys; a network operator may configure the ambulance communication module's private key (e.g. via OTA mechanisms) on the subscriber identity module SIM (or other secure element within the ambulance communication module 161). Especially, the ambulance communication module key-pairs can also be added dynamically and modified (e.g. via a communication using non-access stratum NAS communication or over-the-air OTA communication).

According to the present invention, especially only the eligible ambulance communication module 161 (i.e. chosen by the public safety answering point entity or functionality 150) can use its private key to decrypt the record and verify the public safety answering point entity or functionality 150 when using the public key of the public safety answering point entity or functionality 150.

Furthermore, it is especially preferred according to the present invention that, optionally, a hash value of the data record (i.e. the token information) is generated by the public safety answering point entity or functionality 150 - and secured via the asymmetric encryption system used - signing the message towards the ambulance communication module 161, i.e. comprising the token information. Together with the partial encryption of such data, this provides the possibility to send both encrypted and readable data fields. The advantage thereof is that the authenticity of the readable fields are able to be assured (i.e. such data fields are not able to be manipulated in an unnoticed manner).

According to the present invention, the following entities are especially involved:
In an IP Multimedia Subsystem (IMS) based network, public-private-key authentication or asymmetric cryptography is to typically to be implemented in the security gateway (SeGW). On the other hand, the IP multimedia services identity module (ISIM) - which is a part of the ambulance communication module 161 - may be stored on a universal integrated circuit card UICC, a subscriber identity module SIM card or another secure element (or computer) in the ambulance communication module 161. The ISIM contains the user's - i.e. the ambulance communication module's (ACM) - private key and other security parameters. Especially according to the present invention, the ISIM is an application on the universal integrated circuit card UICC or SIM card.
Typically (but not necessarily), the proxy call session control function P-CSCF is the first point of contact within the IMS network for the ambulance communication module 161 running asymmetric cryptography methods for secure Session Initiation Protocol (SIP) communication.
Furthermore typically (but not necessarily), the security gateway (SeGVη forms a secure tunnel between the ambulance communication module 161 and the IMS network for both signaling and media traffic. It uses public-private key authentication or asymmetric cryptography to authenticate the devices trying to connect to the network.
Furthermore typically (but not necessarily), the serving call session control function S-CSCF acts as the central node in the IMS network, managing the session control.
Furthermore typically (but not necessarily), the interrogating call session control function I-CSCF is responsible for forwarding SIP messages in the IMS network to the public safety answering point entity or functionality 150.
Furthermore typically (but not necessarily), the home subscriber server HSS is a central database plays a crucial role in the authentication process which contains user-related and subscriber-related information.

Especially, according to the present invention, the following variants and/or options are possible:
-- the ambulance communication module 161 may be entitled to combine sessions and connections incl. those with standard low priority contexts with multipath TCP;
-- alternative encryption/verification mechanisms (that are used either instead of the public key infrastructure mechanisms discussed in the context of the present invention disclosure, or in addition to such mechanisms) may use block chain;
-- furthermore, other encryption/verification mechanisms (again that are used either instead of the public key infrastructure mechanisms discussed in the context of the present invention disclosure, or in addition to such mechanisms) may use PLMN subscription and adjacent sim-based mechanisms;
-- furthermore, failing authentication and false en-/decryption of the token (information) may be logged to prevent misuse; the setup needs to contain a valid identity (e.g., IMSI of the SIM, which is associated with the operator issuing the SIM);
-- optionally records of the overall procedures can be generated and stored in a database. This as means for Quality assurance and documentation.

## Claims

1. Method for conducting an emergency communication involving a public safety answering point entity or functionality (150), a mobile point of care entity (160) as well as a tele-medical service entity or functionality (170), wherein the mobile point of care entity (160) comprises an ambulance communication module (161), wherein the public safety answering point entity or functionality (150) is configured to receive an initiating emergency communication (101) being a privileged communication and being related to an emergency situation,
wherein, by means of the ambulance communication module (161) establishing a complementary emergency communication (102) with the tele-medical service entity or functionality (170), the mobile point of care entity (160) is configured to be supported in view of the emergency situation, wherein the method comprises the following steps:
-- in a first step, the initiating emergency communication (101) is received by the public safety answering point entity or functionality (150),
-- in a second step, the public safety answering point entity or functionality (150) selects the mobile point of care entity (160) and transmits emergency communication-related data towards the ambulance communication module (161) of the mobile point of care entity (160),
-- in a third step, the ambulance communication module (161) of the mobile point of care entity (160) initiates the complementary emergency communication (102), to the tele-medical service entity or functionality (170), wherein the complementary emergency communication (102) is likewise a privileged communication.

2. Method according to claim 1, wherein the initiating emergency communication (101) is a mobile-originated emergency communication, a mobile-originated emergency call or a mobile-originated eCall,
wherein especially, the emergency situation is such as that help is required, especially from the mobile point of care entity (160),
wherein especially, the mobile point of care entity (160) is configured to be supported - by the tele-medical service entity or functionality (170) and by means of using the complementary emergency communication (102) between the ambulance communication module (161) and the tele-medical service entity or functionality (170) - in helping in view of the emergency situation.

3. Method according to one of the preceding claims, wherein the complementary emergency communication (102) is, or corresponds to, a multimedia emergency communication or to a multimedia emergency call or to an emergency call setup, towards the tele-medical service entity or functionality (170), wherein especially the complementary emergency communication (102) is initiated towards the tele-medical service entity or functionality (170) that has been assigned by the public safety answering point entity or functionality (150),
wherein especially the complementary emergency communication (102) is assigned privileges in accordance to the privileges of the initiating emergency communication (101), wherein the complementary emergency communication (102) uses privileges associated with the initiating emergency communication (101) to access any available network, especially regardless of commercial agreements or contracts with said network, wherein especially the complementary emergency communication (102) is prioritized over other non-emergency communications to ensure the best possible connection quality, wherein especially the complementary emergency communication (102) includes multimedia transmission and is established over packet-oriented networks, capable of delivering data rates sufficient for high-definition video communication,
wherein especially the emergency call setup includes a number or uniform resource location, URL, assigned by the public safety answering point entity or functionality (150) to connect the ambulance communication module (161) with the tele-medical service entity or functionality (170),
wherein especially the emergency call setup is established and accommodates a multimedia call.

4. Method according to one of the preceding claims, wherein the emergency communication-related data, transmitted to the ambulance communication module (161) of the mobile point of care entity (160), comprises a token information, especially a token information generated by the public safety answering point entity or functionality (150),
wherein, by means of the token information, the ambulance communication module (161) of the mobile point of care entity (160) is allowed to establish the privileged complementary emergency communication (102) to the tele-medical service entity or functionality (170),
wherein especially the token information is a temporary token information, wherein especially the token information is an item that is assigned by the public safety answering point entity or functionality (150),
wherein especially the token information is verified, decrypted and/or authenticated by the ambulance communication module (161), wherein especially verification of the token at the ambulance communication module (161) involves decrypting the token and checking the digital signature to ensure the authenticity and integrity of the data,
wherein especially a receipt confirmation is transmitted, by the ambulance communication module (161), to the public safety answering point entity or functionality (150) upon successful verification and decryption of the token information.

5. Method according to one of the preceding claims, wherein the token information comprises one or a plurality out of the following:
-- routing information to a connection end point for mobile point of care entity services, especially the tele-medical service entity or functionality (170), preferably a hospital or another public safety answering point entity or functionality (150),
-- an identifier information of the originating public safety answering point entity or functionality (150),
-- data related to or associated with the current emergency situation requiring the help of the mobile point of care entity (160), especially comprising eCall-related data and/or an eCall-minimum set of data, wherein especially such data related to or associated with the current emergency situation are encrypted and/or comprise a digital signature for authentication purposes,
-- key information to authenticate the ambulance communication module (161) against the tele-medical service entity or functionality (170),
-- data about the network and/or other call-related data on which the initiating emergency communication originated.

6. Method according to one of the preceding claims, wherein the initiation of the complementary emergency communication (102), having the privileges of the initiating emergency communication (101) - or, at least, comparable privileges, especially regarding its routing and/or pre-emption rules regarding other communication flows on shared resources - is secured by means of using a public key infrastructure using asymmetric encryption methods in a manner such that at least the mobile point of care entity (160) and the public safety answering point entity or functionality (150) are assigned, respectively, to a key information comprising a public key and a private key.

7. Method according to one of the preceding claims, wherein the key information of the mobile point of care entity (160) is added and/or modified dynamically, especially using a procedure based non-access stratum messages and/or a procedure based on over the air transmission,
wherein especially a hash value of the token information is generated and secured via asymmetric encryption by means of signing the message.

8. Method according to one of the preceding claims, wherein the public safety answering point entity or functionality (150) - after or while receiving the initiating emergency communication (101) - analyzes data associated with the initiating emergency communication (101), especially an emergency call or an eCall, wherein especially the data analyzed by the public safety answering point entity or functionality (150) include location information, patient condition, and other relevant emergency details.

9. Ambulance communication module (161) especially related to a mobile point of care entity (160), for conducting an emergency communication involving a public safety answering point entity or functionality (150), the ambulance communication module (161) as well as a tele-medical service entity or functionality (170), wherein the ambulance communication module (161) is configured such that after the public safety answering point entity or functionality (150) having received an initiating emergency communication (101) being a privileged communication and being related to an emergency situation, the ambulance communication module (161) establishes a complementary emergency communication (102) with the tele-medical service entity or functionality (170), especially such that the mobile point of care entity (160) is able to be supported in view of the emergency situation, especially in helping in view of the emergency situation,
wherein the ambulance communication module (161) is configured such that:
-- the ambulance communication module (161) receives emergency communication-related data from the public safety answering point entity or functionality (150), especially after the public safety answering point entity or functionality (150) having received the initiating emergency communication (101) and selected the mobile point of care entity (160),
-- the ambulance communication module (161) initiates the complementary emergency communication (102), to the tele-medical service entity or functionality (170), wherein the complementary emergency communication (102) is likewise a privileged communication.

10. Public safety answering point entity or functionality (150) for conducting an emergency communication that additionally involves an ambulance communication module (161) of a mobile point of care entity (160) as well as a tele-medical service entity or functionality (170), wherein the public safety answering point entity or functionality (150) is configured such as to receive an initiating emergency communication (101) being a privileged communication and being related to an emergency situation, and the public safety answering point entity or functionality (150) being configured such that a complementary emergency communication (102) is established between the ambulance communication module (161) and the tele-medical service entity or functionality (170) in order for the mobile point of care entity (160) being supported in view of the emergency situation, wherein the public safety answering point entity or functionality (150) is configured such that:
-- the initiating emergency communication (101) is received by the public safety answering point entity or functionality (150),
-- the public safety answering point entity or functionality (150) selects the mobile point of care entity (160) and transmits emergency communication-related data towards the ambulance communication module (161) of the mobile point of care entity (160) in view of the complementary emergency communication (102) being established to the tele-medical service entity or functionality (170), wherein the complementary emergency communication (102) is likewise a privileged communication.

11. System or telecommunications network (100) comprising, or being associated or assigned to, a public safety answering point entity or functionality (150) for conducting an emergency communication involving the public safety answering point entity or functionality (150), a mobile point of care entity (160) as well as a tele-medical service entity or functionality (170), wherein the mobile point of care entity (160) comprises an ambulance communication module (161), wherein the public safety answering point entity or functionality (150) is configured to receive an initiating emergency communication (101) being a privileged communication and being related to an emergency situation,
wherein, by means of the ambulance communication module (161) establishing a complementary emergency communication (102) with the tele-medical service entity or functionality (170), the mobile point of care entity (160) is configured to be supported in view of the emergency situation, wherein the system or telecommunications network (100) is configured such that:
-- the initiating emergency communication (101) is received by the public safety answering point entity or functionality (150),
-- the public safety answering point entity or functionality (150) selects the mobile point of care entity (160) and transmits emergency communication-related data towards the ambulance communication module (161) of the mobile point of care entity (160),
-- the ambulance communication module (161) of the mobile point of care entity (160) initiates the complementary emergency communication (102), to the tele-medical service entity or functionality (170), wherein the complementary emergency communication (102) is likewise a privileged communication.

12. Program comprising a computer readable program code which, when executed on a computer or on a public safety answering point entity or functionality (150) or on an ambulance communication module (161) of a mobile point of care entity (160) or on a tele-medical service entity or functionality (170), or in part on a public safety answering point entity or functionality (150) and/or in part on an ambulance communication module (161) of a mobile point of care entity (160) and/or in part on a tele-medical service entity or functionality (170), causes the computer or the public safety answering point entity or functionality (150) or the ambulance communication module (161) or the tele-medical service entity or functionality (170) to perform a method according one of claims 1 to 8.

13. Computer-readable medium comprising instructions which when executed on a computer or on a public safety answering point entity or functionality (150) or on an ambulance communication module (161) of a mobile point of care entity (160) or on a tele-medical service entity or functionality (170), or in part on a public safety answering point entity or functionality (150) and/or in part on an ambulance communication module (161) of a mobile point of care entity (160) and/or in part on a tele-medical service entity or functionality (170), causes the computer or the public safety answering point entity or functionality (150) or the ambulance communication module (161) or the tele-medical service entity or functionality (170) to perform a method according one of claims 1 to 8.
